# EUROPEAN PATENT APPLICATION

(11) **EP 1 512 945 A2**
(43) Date of publication of application: **09.03.2005**
(21) Application number: 04077444.0
(22) Date of filing: 01.09.2004
(51) Int. Cl.: G01D 4/00

(54) **Method and device for taking a meter reading**

(30) Priority: 04.09.2003 BE 200300478
(71) Applicant: Xemex, naamloze vennootschap, 2000 Antwerpen (BE)
(72) Inventor: Schotte, Dominique, 8310 Assebroek (BE)
(74) Representative: Donné, Eddy

(57) **Abstract**

Method for taking a meter reading with a digit mechanism (18) provided behind a display (16), characterised in that it consists in taking an image of at least one digit wheel (19) of the above-mentioned digit mechanism (18) at set times; in converting this image in numerical data; and in transmitting these numerical data via data communication means to a central collection point where these numerical data can be further treated or stored.

## Description

The invention concerns a method for taking meter reading.

The invention also concerns a device for taking a meter reading.

More particularly, the invention is meant for taking meter readings, such as those that are used for example to determine the consumption of electricity, water, gas or the like, and which, as is known, are equipped with a digit mechanism in the shape of one or several digit wheels erected next to each other which revolve opposite a display as a function of the consumption, such that the meter can be read in said display, which meter reading can then be used to calculate the consumption.

Until now, the meter readings of such meters are taken periodically, for example annually, in order to calculate the invoice of consumption, in a manual manner, either by a person from the electricity, gas, or water company who is sent on the spot to register the meter reading, or by the consumer himself who then communicates the meter reading to said company by telephone or the like.

A disadvantage of such a method is that it is rather time-consuming.

Another disadvantage is that the meter reading is only verified at certain moments, for example annually, such that an intermediate abnormal surplus consumption, for example due to a water leak or the like, will be noted late, and the consumer will as a result receive an unexpectedly high invoice.

Another disadvantage is that the above-mentioned suppliers of electricity, gas, water or the like, are not aware of the actual consumption profiles of their customers, such that it is difficult for them to respond to changing market trends.

Now that the market has been liberalised, there is an increased demand for a better knowledge of the above-mentioned consumption profiles, such that market changes can be responded to more expertly.

A possible solution consists in replacing the above-mentioned meters by meters with integrated digital or electronic recorders whose readings can be automatically transmitted on a periodical basis via telecommunication means to the supplier concerned of electricity, gas, water or the like.

A major disadvantage of such meters is that they are relatively expensive compared to the conventional meters with a digit mechanism and that, consequently, it is not economically feasible to replace all the existing conventional meters by digital or electronic appliances which are more expensive.

Also, the present invention aims to remedy the above-mentioned and other disadvantages by providing a method with which the meter reading of an existing meter, equipped with a digit mechanism, can be recorded from a distance in a simple and inexpensive manner.

This aim is reached according to the invention by taking an image of at least one digit of the above-mentioned digit mechanism at set times; by converting this image in numerical data; and by transmitting these numerical data via data communication means to a central collection point where these numerical data can be further treated or stored.

The image can be taken by means of an optical image sensor, whereby this image is subsequently converted in numerical data by means of a numerical recognition program.

The frequency for taking the meter reading is preferably such that every meter reading is sampled at least twice.

The invention also concerns a device which makes it possible to take the meter reading with a digit mechanism according to the above-described method, whereby this device mainly consists of an image recorder directed to the above-mentioned digit mechanism; a data processing unit connected to the latter which comprises at least a program for converting an image coming from the image recorder into numerical data; a data transfer unit connected to the latter which is connected to a central data collection point via data communication means.

In order to better explain the characteristics of the invention, the following preferred embodiment according to the invention is described as an example only without being limitative in any way, with reference to the accompanying drawings, in which:
figure 1 schematically represents a device according to the invention for taking a meter reading;
figure 2 represents a practical embodiment of a device according to the invention.

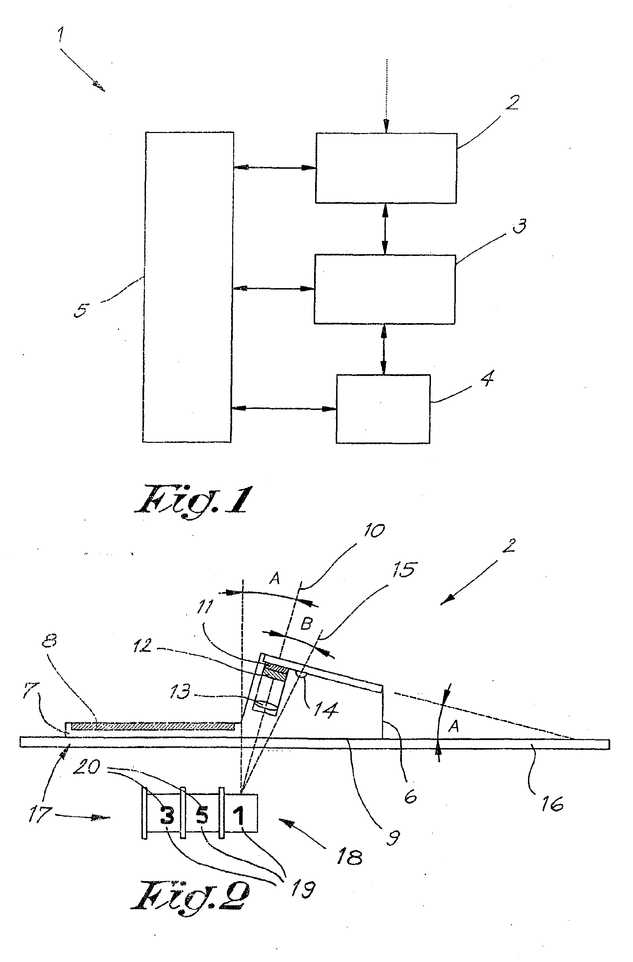

The device 1 represented in figure 1 consists of an image recorder 2, a data processing unit 3 connected onto the latter, a data transfer unit 4 which is connected to a central collection point for the data of a supplier of electricity, water, gas or the like, not represented in the figures - wireless or via another data communication means, and finally a supply unit 5 which may consist of a connection to the electricity grid or of one or several batteries.

As represented in figure 2, the image recorder 2 mainly consists of a holder 6 with a body which in this case is made of an opaque material, whereby the holder 6 is provided with a laterally protruding viewing window 7 which is covered by an optical filter plate 8 situated practically in the extension of the base plane 9 of the above-mentioned body of the holder 6.

In the holder 6 are successively provided one after the other, in a single picture line 10, an optical image sensor 11, for example of the CMOS type, an optical filter 12 and a lens 13, which picture line 10 encloses an angle A with the base plane 9 of the holder 6.

Further, a light source 14 is provided in the holder 6, whose direction of radiation 15 encloses an angle B with the above-mentioned picture line 10.

The light source 14 is preferably an infrared light source, and the above-mentioned optical filter 12 is preferably a filter which mainly only transmits light in the spectrum of said light source 14, whereas the filter plate 8 preferably filters out the light of said light source 14, entirely or at least to a large extent.

The use of the above-mentioned device 1 is very simple and as follows.

The image recorder 2, as represented in figure 2, is provided with its base plane 9 on the display 16 of a conventional meter 17 which is equipped with a cylindrical digit mechanism 18 situated behind the display 16 and which is composed of one or several digit wheels 19 erected next to each other and which are provided with digits 20 on their perimeters.

The image recorder 2 is positioned on the above-mentioned display 16 and is fixed by means of glueing or the like, such that the picture line 10 and the direction of radiation 15 of the light source 14 are directed to the digit mechanism 18 on the one hand, whereas the digit mechanism remains visible through the filter plate 8 of the viewing window 7 of the holder 6.

The data processing unit 3 has a built-in clock which will activate the light source 14 at set times and which will light up the digit mechanism 18, whereby an image of the digit mechanism 18 is simultaneously recorded by the image sensor 11.

Thanks to the optical filter 12, annoying effects of external light sources are filtered out from the environment.

Thanks to the filter plate 8, it is possible to also visually observe the meter reading through said filter plate 8, if necessary, without any annoying or blinding effects of the light source 14.

A microchip is present in the data processing unit 3 comprising a numerical recognition program which makes it possible to convert the recorded image in digital numerical data which correspond to the meter reading at that time.

In this manner, meter readings are successively taken at set times, which are then transmitted via the above-mentioned data transfer unit 4, either separately or in groups, for example at the end of the day, to the above-mentioned collection point of the above-mentioned supplier, where these meter readings can be further stored in the form of numerical data or processed for invoicing, for deducing statistical data or the like.

It is also possible for the supplier to keep an eye on the meter readings, such that in the case of excessive surplus consumption, the subscriber can be notified so as to able to detect a possible flaw and to remedy it if necessary.

The frequency for taking the meter readings preferably meets the Nyquist criterion, such that every meter reading is at least sampled twice.

Possibly, also additional data can be transmitted to the collection point together with the above-mentioned numerical data, more particularly additional data related to among others the meter number concerned; the time of reading; the condition of the power supply; the good working order of the meter; possible sabotage or fraud and the like.

Naturally, in this case the processing unit 3 should be equipped with means to control the operation of among others the image sensor 11, the electric power supply 5, the clock and the data transfer unit 4.

Possibly, the connection between the data transfer unit 4 and the collection point of the supplier may run in two directions, such that the device 1 may be controlled from the collection point if necessary, for example in connection with the time pattern, in other words the time and/or the frequency of taking the meter readings. This connection can be part of the electricit grid, the telephone network, cable network or any other telecommunication network whatsoever.

The setting of the image sensor 11 and the light source 14 in relation to the digit mechanism 18 is very important, since in this manner is avoided that the recorded image is disturbed by the light which is reflected by the lens operation of the cylindrical digit mechanism 18. The above-mentioned angle B is thereby directive for the good working order of the device, and it is preferably situated between 10° and 20°, and preferably amounts to 15°.

The shape of the digit mechanism 18 usually results in that the exposure of the digits 20 is not uniform and in that the top and bottom of the digits 20 is exposed less than the central part. The exposure not being uniform is overcome by the image recorder 2 by making the limit value at which a pixel turns from white into black adjustable per pixel or per group of adjacent pixels.

The data processing unit 3 is preferably equipped with means which make it possible to control the exposure of the digit mechanism 18 by determining the setting of the black/white level, which is done on the basis of an algorithm which reckons with the shade of grey of the pixels, the number of recognizable pixels, the amount of light and the exposure time.

It is clear that the recorded image must not necessarily be an image of the entire digit mechanism, but that the image of only a single digit wheel 19, for example that of the units, may be sufficient to determine the consumption, whereby not only the value of the digit wheel 19 concerned is recorded in this case, but also the number of revolutions made by the observed digit wheel 19 is counted. Naturally, the device 1 can be made cheaper in this case.

It is also clear that it is not excluded that the image recorded by the image sensor can be transmitted to the central data collection point, whereby the recognition of the digits then takes place in the actual collection point.

The invention is by no means limited to the above-described embodiment represented in the accompanying drawings; on the contrary, such a method and device for taking a meter reading can be made in all sorts of variants while still remaining within the scope of the invention.

## Claims

1. Method for taking a meter reading with a digit mechanism (18) provided behind a display (16), whereby it consists in taking an image of at least one digit wheel (19) of the above-mentioned digit mechanism (18) at set times; in converting this image in numerical data; and in transmitting these numerical data via data communication means to a central collection point where these numerical data can be further treated or stored, **characterised in that** the image is recorded by means of an image recorder (2) by shining with a light source (14) on the digit mechanism (18) and by making the reflected light shine through an optical filter in the spectrum of the above-mentioned light source (14) onto an image sensor (11).

2. Method according to claim 1, **characterised in that** the light of the light source (14) is made to shine onto the above-mentioned digit mechanism (18) at a slanting angle.

3. Method according to claim 1, **characterised in that** the reflected light of the above-mentioned digit mechanism (18) is recorded by an image sensor (11) which is directed slantingly onto the above-mentioned digit mechanism (18).

4. Method according to claim 1, **characterised in that** the image, after having been recorded, is converted into numerical data by means of a numerical recognition program.

5. Method according to claim 4, **characterised in that**, apart from the above-mentioned numerical data, also one or several of the following additional data are transmitted to the above-mentioned collection point: the number of the meter, the condition of the electric power supply (5) of the device (1), the good working order of the meter (17), information regarding fraud or sabotage or the like.

6. Method according to claim 1, **characterised in that** the image is recorded at regular points in time, whereby these points in time are dictated by a clock and whereby the time pattern can be altered from the above-mentioned collection-point.

7. Method according to claim 1, **characterised in that** the frequency of taking the meter reading is such that every meter reading is sampled at least twice.

8. Device which makes it possible to take a meter reading with a digit mechanism according to the method of any of the preceding claims, whereby this device mainly consists of an image recorder (2) directed to the above-mentioned digit mechanism (18); a data processing unit (3) connected to the latter which comprises at least a program for converting an image coming from the image recorder (2) in numerical data; a data transfer unit (4) connected to the latter which is connected to a central data collection point via data communication means and whereby the image recorder (2) is equipped with a light source (14) directed to the digit mechanism (18) and with an image sensor (11) with a lens (13) placed in front of it, **characterised in that** an optical filter (12) is provided in front of the image sensor (11) which only transmits the light in the spectrum of the above-mentioned light source (14).

9. Device according to claim 8, **characterised in that** the picture line (10) of the image recorder (2) is directed slantingly at an angle (A) in relation to an orthogonale to the above-mentioned digit mechanism (18).

10. Device according to claim 8, **characterised in that** the direction of radiation (15) of the above-mentioned light source (14) and the above-mentioned picture line (10) of the image recorder (2) enclose an angle (B).

11. Device according to claim 10, **characterised in that** the above-mentioned angle (B) is situated between 10° and 20° and preferably amounts to 15°.

12. Device according to claim 8, **characterised in that** the image recorder (2) is provided with a viewing window (7) with an optical filter plate (8) which largely filters the light having the same spectrum as the light source (14).

13. Device according to claim 8, **characterised in that** the above-mentioned light source (14) is an infrared light source.

14. Device according to claim 8, **characterised in that** it is equipped with a clock to control the image recording and the transmission of the meter readings to the data collection point.

15. Device according to claim 8, **characterised in that** the image recorder (2) has a black/white level setting which can be adjusted separately per pixel or per group of adjacent pixels.

16. Device according to claim 8, **characterised in that** the data processing unit (3) comprises means to determine the setting of the black/white level.

17. Device according to claim 8 and 14, **characterised in that** the processing unit (3) comprises means to control the operation of among others the image recorder (2), the electric power supply (5) of the device (1), the above-mentioned clock and the data transfer unit (3).
